# EUROPEAN PATENT APPLICATION

(11) **EP 4 782 093 A1**
(43) Date of publication of application: **29.07.2026**
(21) Application number: 25315021.3
(22) Date of filing: 22.01.2025
(51) Int. Cl.: B01D 53/26

(54) **SYSTEM FOR CLEANING EXHAUST OF FUEL CELL SYSTEM AND FILTRATION CARTRIDGE**

(71) Applicant: MANN+HUMMEL GmbH, 71636 Ludwigsburg (DE)
(72) Inventor: HARENBROCK, Michael, 71640 Ludwigsburg (DE); AUGUSTIN, Lilian, 13840 Rognes (FR)
(74) Representative: Mann + Hummel Intellectual Property

(57) **Abstract**

A system (100) for cleaning exhaust of a fuel cell system (200), the system (100) comprising at least one reservoir (20) comprising a filtration cartridge (40) with adsorbent/absorbent material (42) configured to remove perfluoroalkyl and polyfluoroalkyl substances from the exhaust, and a release valve (50) connected to an outlet port (26) of the at least one reservoir (20).

## Description

### Technical Field

Embodiments relate to a system for cleaning exhaust of a fuel cell system, as well as to a filtration cartridge for the system for cleaning exhaust of the fuel cell system.

### Background Art

Because of the high stability of per- and polyfluorinated materials, they are often used at different positions of proton exchange membrane (PEM) fuel cell systems. For example, stack membranes for PEM fuel cell systems are often made from perfluorosulfonic acid (PFSA) as they provide good ion conductivity, electrical resistance, and membrane thickness. However, under challenging operating conditions, the membrane undergoes degradation which lead to perfluoroalkyl and polyfluoroalkyl substances (PFAS) emission in the effluent water from the cathode.

When entering the environment, e.g., through fuel cell exhaust, the PFAS cannot be further degraded through natural processes, so they accumulate in soil and water and can thus end up and accumulate in food and beverages, leading to health issues. Therefore, regulations will be introduced to prevent PFAS emissions into the environment, banning their use in many applications across industries. These regulations could endanger fuel cell and more largely hydrogen technologies (e.g., electrolyzer and system components) as PFAS-free alternatives with similar performance and cost will not be available on the market in due time.

US 6,855,449 B2 discloses a fuel cell main body and a circulation path that causes water passing through the fuel cell main body to circulate. The fuel cell system is characterized in having a fluoride absorber embedded in the water circulation path, this fluoride absorber absorbing fluorine elements from the water circulating through this water circulation path.

WO 2006038325 A1 discloses a water treatment apparatus for fuel cell wherein the water recovered from a fuel cell is treated by means of an electric deionization unit, improved so as to attain satisfactory defluorination from water flowing into the electric deionization unit. Any wastewater from a negative electrode chamber of electric deionization unit is fed through a transfer pipe into an air wash chamber wherein air wash is carried out. The resultant water is decarboxylated in a decarboxylation chamber, and is caused by means of a pump to sequentially flow through defluorination chambers and demetallization chambers, and is fed into the electric deionization unit.

### Summary

An object of the embodiments is to provide an improved system for cleaning exhaust of a fuel cell system.

A further object of the embodiments is to provide a filtration cartridge for the improved system for cleaning exhaust of the fuel cell system.

According to an aspect of the embodiments the object is achieved by a system for cleaning exhaust of a fuel cell system, the system comprising at least one reservoir comprising a filtration cartridge with adsorbent/absorbent material configured to remove perfluoroalkyl and polyfluoroalkyl substances from the exhaust, and a release valve connected to an outlet port of the at least one reservoir.

According to a further aspect of the embodiments the further object is achieved by a filtration cartridge for the system, the filtration cartridge comprising a cartridge container filled with adsorbent/absorbent material, the cartridge container comprising at least one inflow opening and at least one outflow opening. The adsorbent/absorbent material is arranged inside the cartridge container and between the at least one inflow opening and the at least one outflow opening.

Advantageous embodiments are described in the dependent claims, the description and the drawings.

The proposed system comprises a perfluoroalkyl and polyfluoroalkyl substances (PFAS) capture system from the fuel cell exhaust before it is released into the environment. It may be designed to be part of a fuel cell stack used in mobile applications such as fuel cell electric vehicles (FCEVs), stationary energy production, and other fuel cell systems.

According to the embodiments, the system may further comprise another reservoir comprising another filtration cartridge with other adsorbent/absorbent material configured to further remove perfluoroalkyl and polyfluoroalkyl substances from the exhaust. The release valve may be connected to an inlet port of the other reservoir, and the other reservoir may further comprise an outlet port for the cleaned exhaust. Advantageously, the filtration cartridges may include different adsorbent/absorbent materials, so that the filtration cartridge in the other reservoir may effectively separate a specific compound only after a concentration of another compound that will complete with free binding sites is significantly reduced by the filtration cartridge in the at least one reservoir.

According to the embodiments, the system may further comprise a water separator for separating water from an air flow, the water separator comprising an inlet port for the air flow, an outlet port for the air flow from which the water is separated, and a water drain port for the water separated from the air flow. An inlet port of the at least one reservoir may be connected to the water drain port of the water separator.

The system may be based on two existing components a water separator and an ion exchanger. The water separator may be placed, e.g., directly at the exhaust port of the full cell or between an outlet of a turbine and an outlet of a hydrogen purge valve. The water separator may separate water from fuel cell exhaust. Depending on the speed of the removal process, a two-stage reservoir is envisaged. The water flowing out of the water separator is collected into a first reservoir, containing any one or any combination of an adsorbent/absorbent material, an activated carbon, and ion exchange resin, specifically designed to remove PFAS from the water. The second reservoir may collect the water at least partially freed from the PFAS in the first reservoir, and contains any one or any combination of an adsorbent/absorbent material, an activated carbon, and an ion exchange resin, specifically designed to remove remaining PFAS from the water. Sensors can be integrated for measuring the filling level of the reservoirs.

Over time, the adsorbent/absorbent material will become saturated with PFAS ions. Therefore, the adsorbent/absorbent material may be applied on a cartridge that would easily be replaced by a new one.

Thus, distinguishing features of the system are its capacity to both separate water from fuel cell exhaust and to free this water from PFAS.

Advantageously, a solution is provided to capture PFAS in the effluent water from fuel cells before it is released into the environment, thus being compliant with future regulatory requirements concerning PFAS being released into the environment.

According to a favorable embodiment of the system, the filtration cartridges may be arranged inside the at least one reservoir and the other reservoir such that an inlet port of the at least one reservoir and the inlet port of the other reservoir are respectively separated from the outlet port of the at least one reservoir and the outlet port of the other reservoir by the filtration cartridges. Thus, a fluid flow from the inlet port to the outlet port of the reservoirs is forced to stream through the filtration cartridge.

According to a favorable embodiment of the system, the at least one reservoir and the other reservoir may respectively comprise housings in which the filtration cartridges are respectively arranged. The filtration cartridge, filled with the adsorbent/absorbent material, may be replaced when the adsorbent/absorbent material is saturated.

According to a favorable embodiment of the system, each of the filtration cartridges may comprise a cartridge container filled with the adsorbent/absorbent material, the cartridge container comprising at least one inflow opening and at least one outflow opening. The adsorbent/absorbent material may be arranged inside the cartridge container and between the at least one inflow opening and the at least one outflow opening. Thus, the adsorbent/absorbent material, the activated carbon, the ion exchange resin, and/or a bead structure bed may easily be handled.

According to a favorable embodiment of the system, the housings of the at least one reservoir and the other reservoir respectively comprise sealing fits for respectively accommodating the filtration cartridges such that a fluid flow from the inflow opening to the outflow opening is forced through each of the filtration cartridges. By this way, it may be guaranteed that water from the water separator will be cleaned by the adsorbent/absorbent material.

According to a favorable embodiment of the system, the release valve may be for controlling a contact time between the adsorbent/absorbent material and the exhaust. Thus, the adsorption process of the PFAS at the adsorbent/absorbent material may be controlled.

According to a favorable embodiment of the system, the adsorbent/absorbent material may be any one or any combination of an activated carbon, an ion exchange resin, and a bead structure bed. Advantageously, PFAS removal from the water may be facilitated.

According to a favorable embodiment of the system, the filtration cartridge may be replaceable. The filtration cartridge, filled with the adsorbent/absorbent material, may be replaced when the adsorbent/absorbent material is saturated.

The proposed filtration cartridges may be used in the PFAS capture system from the fuel cell exhaust before it is released into the environment.

Water flowing out of the water separator of the system may be collected into the first reservoir with the filtration cartridge containing any one or any combination of an adsorbent/absorbent material, an activated carbon, and an ion exchange resin, specifically designed to remove PFAS from the water. The second reservoir may also be equipped with the other filtration cartridge containing any one or any combination of an adsorbent/absorbent material, an activated carbon, and an ion exchange resin, specifically designed to remove remaining PFAS from the water.

Over time, the adsorbent/absorbent material will become saturated with PFAS ions. Therefore, the filtration cartridge is designed to be easily replaced by a new one.

Advantageously, a solution is provided to capture PFAS in the fuel cell exhaust before it is released into the environment, thus being compliant with future regulatory requirements concerning PFAS being released into the environment.

According to a favorable embodiment of the filtration cartridge, the at least one inflow opening and the at least one outflow opening may comprise a sieve or a fluid permeable membrane. The adsorbent/absorbent material may be any one or any combination of an activated carbon, an ion exchange resin, and a bead structure bed. Thus, water may easily enter the filtration cartridge to react with the adsorbent/absorbent material inside the filtration cartridge and leave the filtration cartridge through the outflow opening. Advantageously, PFAS removal from the water may be facilitated.

### Brief Description of Drawings

The embodiments together with the above-mentioned and other objects and advantages may best be understood from the following detailed description of the embodiments, but not restricted to the embodiments.
Figure 1 shows a system for cleaning exhaust of a fuel cell system, according to the embodiments.
Figure 2 shows a water separator of the system according to Figure 1.
Figure 3 shows a fuel cell system layout with the system according to Figure 1.

### Description of Embodiments

In the drawings, like elements are referred to with equal reference numerals. The drawings are merely schematic representations, not intended to portray specific parameters of the embodiments. Moreover, the drawings are intended to depict only typical embodiments and therefore should not be considered as limiting the scope of the embodiments.

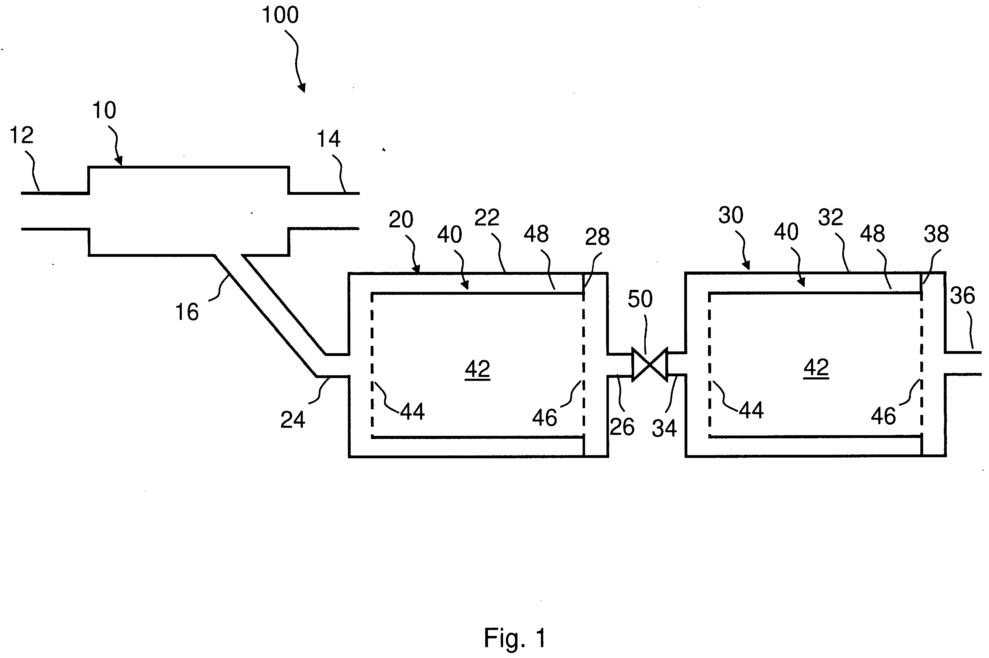

Figure 1 depicts a system 100 for cleaning exhaust of a fuel cell system 200, according to the embodiments.

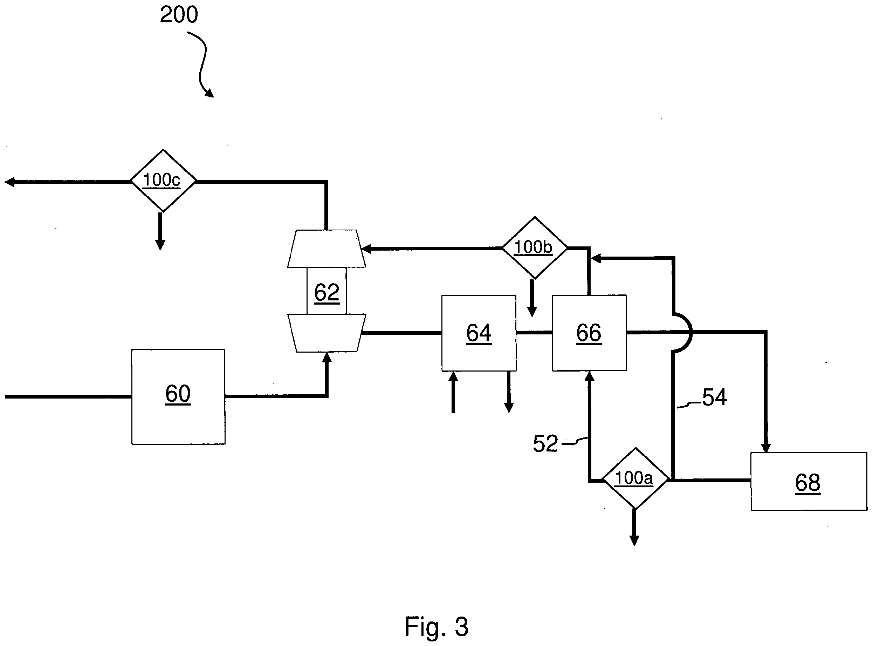

The system 100 is directly connected to an exhaust line of the fuel cell system 200, as depicted in Figure 3, or positioned along the exhaust line, near an outlet, and just before water discharge into the environment or back to the fuel cell system 200.

The system 100 comprises four main components, arranged in a two-stage reservoir configuration. Fuel cell exhaust exiting a fuel cell stack would first pass through a water separator 10 configured to transfer water droplets from the fuel cell exhaust into a water wall film, which can then be drained as liquid water. The liquid water would then flow into the first reservoir 20 containing adsorbent/absorbent material 42. A release valve 50 connected to this first reservoir 20 would retain the water, ensuring maximum contact time with the adsorbent/absorbent material 42 for effective filtration. If additional contact time is required, the water would flow into the second reservoir 30 for a secondary filtration phase. The second reservoir 30 would then release the cleaned exhaust directly into the environment or back to the rest of the fuel cell stack.

The system 100, as depicted in Figure 1, comprises the water separator 10 for separating water from a first air flow having a first water content. The water separator 10 comprises an inlet port 12 for the first air flow, an outlet port 14 for a second air flow with a second water content, and a water drain port 16 for water separated from the first air flow. The first water content is higher than the second water content.

The system 100 further comprises the first reservoir 20 and the second reservoir 30, both reservoirs 20, 30 each comprising a filtration cartridge 40 with adsorbent/absorbent material 42, and a release valve 50.

An inlet port 24 of the first reservoir 20 is connected to the water drain port 16 of the water separator 10. An outlet port 26 of the first reservoir 20 is connected to the release valve 50, which is connected to an inlet port 34 of the second reservoir 30.

The second reservoir 30 comprises an outlet port 36 for the cleaned exhaust.

The adsorbent/absorbent material 42 inside the filtration cartridges 40 is configured to remove at least perfluoroalkyl and polyfluoroalkyl substances (PFAS) from the water.

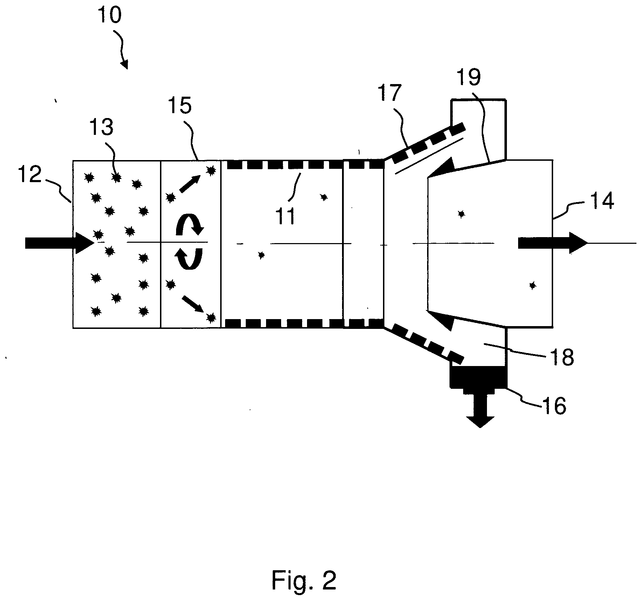

In Figure 2, functioning of the water separator 10 of the system 100 according to Figure 1 is depicted.

The first air flow, air with a high content of water droplets 13, enters the water separator 10 via the inlet port 12. In a swirl generator stage 15 the heavier water droplets 13 are forced to the outer wall of the water separator 10 by the centrifugal force thus forming a water film 11 on the tube wall. In an exterior diffusor 17 the water is separated in a water drain zone 18 being guided to the water drain port 16 of the water separator 10. An internal diffusor 19 separates the second air flow being guided to the outlet port 14. The second air flow only comprises a low content of water droplets 13.

The first and second reservoir 20, 30 are each being provided with a housing 22, 32, wherein the filtration cartridge 40 is arranged inside the housing 22, 32.

The filtration cartridge 40 comprises a cartridge container 48 filled with the adsorbent/absorbent material 42. The cartridge container 48 is equipped with at least one inflow opening 44 and at least one outflow opening 46, wherein the adsorbent/absorbent material 42 is arranged inside the cartridge container 48 between the at least one inflow opening 44 and the at least one outflow opening 46.

The adsorbent/absorbent material 42 may be any one or any combination of an activated carbon, an ion exchange resin, and a bead structure bed for removing at least PFAS from the water.

The at least one inflow opening 44 and the at least one outflow opening 46 are provided with a sieve or a fluid permeable membrane to retain the adsorbent/absorbent material 42 inside the cartridge container 48, in particular, if the adsorbent/absorbent material 42 is a bead structure bed.

The filtration cartridges 40 are arranged inside the housings 22, 32 of the first and second reservoir 20, 30 such that the inlet ports 24, 34 of the first and second reservoir 20, 30 are separated from the outlet ports 26, 36 by the filtration cartridges 40. For this purpose, the housings 22, 32 of the first and second reservoir 20, 30 are each equipped with a sealing fit 28, 38, to accommodate the filtration cartridge 40 such that a fluid flow from the inflow opening 44 to the outflow opening 46 is forced through the filtration cartridge 40.

The filtration cartridges 40 are arranged replaceable such that the filtration cartridges 40 may be exchanged when the adsorbent/absorbent material 42 is saturated with PFAS. The filtration cartridges 40 may include different adsorbent/absorbent materials 42, so that the filtration cartridge 40 in the second reservoir 30 may effectively separate a specific compound only after a concentration of another compound that will complete with free binding sites is significantly reduced by the filtration cartridge 40 in the first reservoir 20.

The release valve 50 is configured to control a contact time between the adsorbent/absorbent material 42 and the water separated from the first air flow. So by the release valve 50 the water may be kept in the first reservoir 20 to enlengthen the reaction time of the water with the adsorbent/absorbent material 42.

Figure 3 depicts a fuel cell system layout with the system 100 according to Figure 1.

The fuel cell system 200 receives air via a cathode air filter 60. The air is led to a compressor 62. Compressed air is cooled in a charge air cooler 64, wettened in a humidifier 66 and fed to a fuel cell stack 68.

Exhaust leaves the fuel cell stack 68 and is fed in a first branch 52 to the system 100, i.e., a first system 100a for PFAS removal. The first branch 52 is a cathode exhaust path interposed between the fuel cell stack 68 and the humidifier 66. The system 100a may release exhaust from which water is separated to the environment, clean the exhaust of PFAS before releasing the exhaust to the environment, and/or send the cleaned exhaust back to the fuel cell system 200, e.g., the humidifier 66.

Exhaust leaves the fuel cell stack 68 and is fed in a second branch 54 to the system 100, i.e., a second system 100b for PFAS removal. The second branch 54 is another cathode exhaust path that goes from the fuel cell stack 68 to a point downstream the humidifier 66 but before the compressor 62. The system 100b may release exhaust from which water is separated to the environment, clean the exhaust of PFAS before releasing the exhaust to the environment, and/or send the cleaned exhaust back to the fuel cell system 200, e.g., the compressor 62.

The system 100 is further located as a third system 100c downstream a mixer (not shown) mixing the exhaust from the compressor 62 and purge gas from an anode loop. The system 100c may release exhaust from which water is separated to the environment, clean the exhaust of PFAS before releasing the exhaust to the environment, and/or send the cleaned exhaust back to the fuel cell system 200.

### Reference Signs List

- 10: water separator
- 11: water film
- 12: inlet port first air flow
- 13: water droplet
- 14: outlet port second air flow
- 15: swirl generator
- 16: water drain port
- 17: exterior diffusor
- 18: water drain zone
- 19: internal diffusor
- 20: first reservoir
- 22: housing
- 24: inlet port
- 26: outlet port
- 28: sealing fit
- 30: first reservoir
- 32: housing
- 34: inlet port
- 36: outlet port
- 38: sealing fit
- 40: filtration cartridge
- 42: adsorbent/absorbent material
- 44: inflow opening
- 46: outflow opening
- 48: cartridge container
- 50: release valve
- 52: first branch
- 54: second branch
- 60: cathode air filter
- 62: compressor
- 64: charge air cooler
- 66: humidifier
- 68: fuel cell stack
- 100: system
- 100a: first system
- 100b: second system
- 100c: third system
- 200: fuel cell system

## Claims

1. A system (100) for cleaning exhaust of a fuel cell system (200), the system (100) comprising:
at least one reservoir (20) comprising a filtration cartridge (40) with adsorbent/absorbent material (42) configured to remove perfluoroalkyl and polyfluoroalkyl substances from the exhaust; and
a release valve (50) connected to an outlet port (26) of the at least one reservoir (20).

2. The system (100) according to claim 1, further comprising another reservoir (30) comprising another filtration cartridge (40) with other adsorbent/absorbent material (42) configured to further remove perfluoroalkyl and polyfluoroalkyl substances from the exhaust,
wherein the release valve (50) is connected to an inlet port (34) of the other reservoir (30), and
the other reservoir (30) further comprises an outlet port (36) for the cleaned exhaust.

3. The system (100) according to claim 2, wherein the filtration cartridges (40) are respectively arranged inside the at least one reservoir (20) and the other reservoir (30) such that an inlet port (24) of the at least one reservoir (20) and the inlet port (34) of the other reservoir (30) are respectively separated from the outlet port (26) of the at least one reservoir (20) and the outlet port (36) of the other reservoir (30) by the filtration cartridges (40).

4. The system (100) according to claim 2 or 3, wherein the at least one reservoir (20) and the other reservoir (30) respectively comprise housings (22, 32) in which the filtration cartridges (40) are respectively arranged.

5. The system (100) according to claim 4, wherein each of the filtration cartridges (40) comprises a cartridge container (48) filled with the adsorbent/absorbent material (42), the cartridge container (48) comprising at least one inflow opening (44) and at least one outflow opening (46), and
the adsorbent/absorbent material (42) is arranged inside the cartridge container (48) and between the at least one inflow opening (44) and the at least one outflow opening (46).

6. The system (100) according to claim 5, wherein the housings (22, 32) of the at least one reservoir (20) and the other reservoir (30) respectively comprise sealing fits (28, 38) for respectively accommodating the filtration cartridges (40) such that a fluid flow from the at least one inflow opening (44) to the at least one outflow opening (46) is forced through each of the filtration cartridges (40).

7. The system (100) according to any one of preceding claims, wherein the release valve (50) is for controlling a contact time between the adsorbent/absorbent material (42) and the exhaust.

8. The system (100) according to any one of preceding claims, wherein the adsorbent/absorbent material (42) is any one or any combination of an activated carbon, an ion exchange resin, and a bead structure bed.

9. The system (100) according to any one of preceding claims, wherein the filtration cartridge (40) is replaceable.

10. The system (100) according to any one of preceding claims, further comprising a water separator (10) for separating water from an air flow, the water separator (10) comprising an inlet port (12) for the air flow, an outlet port (14) for the air flow from which the water is separated, and a water drain port (16) for the water separated from the air flow,
wherein an inlet port (24) of the at least one reservoir (20) is connected to the water drain port (16) of the water separator (10).

11. The system (100) according to any one of preceding claims, wherein the system (100) is a first system (100a) interposed between a fuel cell stack (68) and a humidifier (66) of the fuel cell system (200), and
the exhaust is from the fuel cell stack (68).

12. The system (100) according to any one of claim 1 to 10, wherein the system (100) is a second system (100b) interposed between a humidifier (66) and a compressor (62) of the fuel cell system (200), and
the exhaust is from the fuel cell stack (68) and/or the humidifier (66).

13. The system (100) according to any one of claim 1 to 10, wherein the system (100) is a third system (100c) disposed downstream of a mixer of the fuel cell system (200), and
the exhaust is from the mixer and is a mix of exhaust from the compressor (62) and purge gas from an anode loop.

14. A filtration cartridge (40) for the system (100) according to any one of claims 1 to 4, 7, and 9-13, the filtration cartridge (40) comprising:
a cartridge container (48) filled with the adsorbent/absorbent material (42), the cartridge container (48) comprising at least one inflow opening (44) and at least one outflow opening (46),
wherein the adsorbent/absorbent material (42) is arranged inside the cartridge container (48) and between the at least one inflow opening (44) and the at least one outflow opening (46).

15. The filtration cartridge (40) according to claim 14, wherein each of the at least one inflow opening (44) and the at least one outflow opening (46) comprise a sieve or a fluid permeable membrane, and
the adsorbent/absorbent material (42) is any one or any combination of an activated carbon, an ion exchange resin, and a bead structure bed.
